# EUROPÄISCHE PATENTSCHRIFT

(11) **EP 1 327 542 B1**
(45) Veröffentlichungstag und Bekanntmachung des Hinweises auf die Patenterteilung: **19.05.2004**
(21) Anmeldenummer: 02027488.2
(22) Anmeldetag: 10.12.2002
(51) Int. Cl.: B60H 1/22, F23J 15/02

(54) **Heizgerät und Gehäuse für ein Heizgerät**
Heating device and housing for a heating device
Appareil de chauffage et boîtier pour appareil de chauffage

(30) Priorität: 12.01.2002 DE 10200962
(43) Veröffentlichungstag der Anmeldung: 16.07.2003
(73) Patentinhaber: J. Eberspächer GmbH & Co. KG, 73730 Esslingen (DE)
(72) Erfinder: Humburg, Michael, 73035 Göppingen (DE)
(74) Vertreter: Patentanwalts-Partnerschaft, Rotermund + Pfusch + Bernard

(56) Entgegenhaltungen:
- EP-A- 0 115 707
- DE-A- 4 327 139
- GB-A- 2 173 123
- US-A- 4 923 033

## Beschreibung

Die vorliegende Erfindung betrifft ein Heizgerät sowie ein Gehäuse für ein Heizgerät, insbesondere Standheizung und/oder Zuheizer eines Kraftfahrzeugs.

Als Zuheizer und/oder Standheizung dienende Heizgeräte arbeiten unabhängig von einer Brennkraftmaschine eines mit dem Heizgerät ausgestatteten Kraftfahrzeugs, wobei zur Wärmeerzeugung ein Brennstoff, insbesondere der Kraftstoff des Kraftfahrzeugs, im Heizgerät verbrannt wird. Die dabei entstehenden Verbrennungsabgase treten aus dem Heizgerät aus, wobei üblicherweise ein Abgasstrang an das Heizgerät angeschlossen ist, der die aus dem Heizgerät austretenden Verbrennungsabgase vom Heizgerät wegführt und in die Umgebung emittiert.

Das Dokument US 4 923 033 A offenbart ein Gehaüse für ein Heizgerät und ein Heizgerät nach den Oberbegriffen der Ansprüche 1 und 8.

Aus der DE 43 27 139 A1 ist ein Heizgerät für Fahrzeuge bekannt, das in seinem Gehäuse angeordnete, katalytisch wirksam beschichtete Abschnitte aufweist, über die bei der Verbrennung eines flüssigen Kraftstoffs entstehende heiße Abgase geführt werden. Durch diese Maßnahme wird die Schadstoffemission des Heizgeräts reduziert. Die katalytisch wirksamen Abschnitte sind dabei nach einem Brennraum im Bereich eines Flammrohrs sowie im Bereich eines Wärmetauschers des Heizgeräts angeordnet. Demnach sind die katalytisch wirksamen Abschnitte ohne konstruktive Änderungen des Heizgeräts in dieses integriert. Die katalytisch wirksamen Abschnitte sind hierbei relativ hohen thermischen Belastungen ausgesetzt. Es stehen nur sehr begrenzte Volumina für den Katalysator zur Verfügung, wenn man die für die Oxidation (Verbrennung) notwendigen Volumina nicht einschränken will.

Die vorliegende Erfindung beschäftigt sich mit dem Problem, für ein Heizgerät der eingangs genannten Art eine verbesserte Ausführungsform anzugeben, die insbesondere einen einfachen Aufbau besitzt.

Dieses Problem wird durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein einteiliges oder einstückiges Gehäuse des Heizgeräts so auszubilden, dass darin ein Katalysatorschacht integriert ist, der zur Aufnahme wenigstens eines Katalysatorelements dient, das im Betrieb des Heizgeräts von den Verbrennungsabgasen durchströmt ist. Das Gehäuse enthält somit den Katalysatorschacht sowie einen Brennkammerschacht, in dem die Brennkammer des Heizgeräts ausgebildet bzw. unterbringbar ist. Dementsprechend sind bei der Erfindung ein Katalysatorgehäuse und ein Brennkammergehäuse zu einer baulichen Einheit zusammengefaßt. Eine derartige Einheit kann beispielsweise durch ein Druckgussverfahren, insbesondere aus Aluminium oder aus einer Aluminiumlegierung, mit vergleichbar geringem Aufwand aus einem Stück hergestellt werden. Insbesondere ist die Herstellung des erfindungsgemäßen Gehäuses preiswerter als die Herstellung und der Zusammenbau separater Gehäuse für den Katalysator und die Brennkammer. Durch die Integration des Katalysatorschachts in das Gehäuse sind für den im Katalysatorschacht untergebrachten Katalysator, z.B. ein Monolith, besonders geeignete Betriebsbedingungen realisierbar. Durch die Nähe des Katalysators zur Brennkammer ergibt sich eine relativ rasche Erwärmung des Katalysators beim Start des Heizgeräts, so dass der Katalysator sehr schnell seine erforderliche Betriebstemperatur erreicht. Durch die Integration des Katalysatorschachts in das Gehäuse kann die Form des Katalysatorelements bzw. des Katalysators an die Form des Gehäuses angepaßt werden, insbesondere im Hinblick auf eine besonders kompakte Bauform der gesamten Einheit. Außerdem läßt sich der Katalysatorschacht ohne weiteres so dimensionieren, dass das darin untergebrachte Katalysatorelement ein hinreichendes Volumen- und/oder Oberflächenpotential besitzt, wodurch insbesondere große Druckabfälle bei der Durchströmung des Katalysatorelements vermieden werden können. Des weiteren gestaltet sich der Zusammenbau des Heizgeräts besonders einfach, da das jeweilige Katalysatorelement gegebenenfalls mit einer Lagerungsmatte od.dgl. mit geringem Mehraufwand in das Heizgerät eingebaut werden kann. Die Montage einer zusätzlichen Halterung für ein separates Katalysatorgehäuse können entfallen. Ein weiterer wichtiger Vorteil des erfindungsgemäßen Aufbaus ist darin zu sehen, dass durch die Integration des Katalysatorschachts in das Gehäuse bereits im Gehäuse eine Schalldämmfunktion realisierbar ist, da das Katalysatorelement bei seiner Durchströmung schalldämmend wirkt.

Gemäß einer Weiterbildung ist der Katalysatorschacht stromab eines Abgasauslasses der Brennkammer angeordnet, d.h. das im Katalysatorschacht untergebrachte Katalysatorelement ist der Brennkammer und insbesondere einem Wärmeübertrager des Heizgeräts nachgeschaltet. Hierdurch sind die Abgastemperaturen am Einlaß des Katalysators vergleichsweise niedrig, wodurch sich für das Katalysatorelement erhöhte Standzeiten realisieren lassen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: ein stark vereinfachter, prinzipieller Längsschnitt durch ein Heizgerät nach der Erfindung und

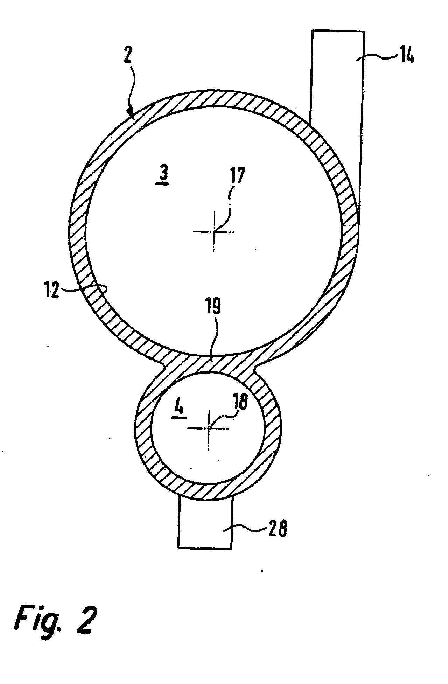

- Fig. 2: ein Querschnitt durch ein Gehäuse des Heizgeräts entsprechend den Schnittlinien II in Fig. 1.

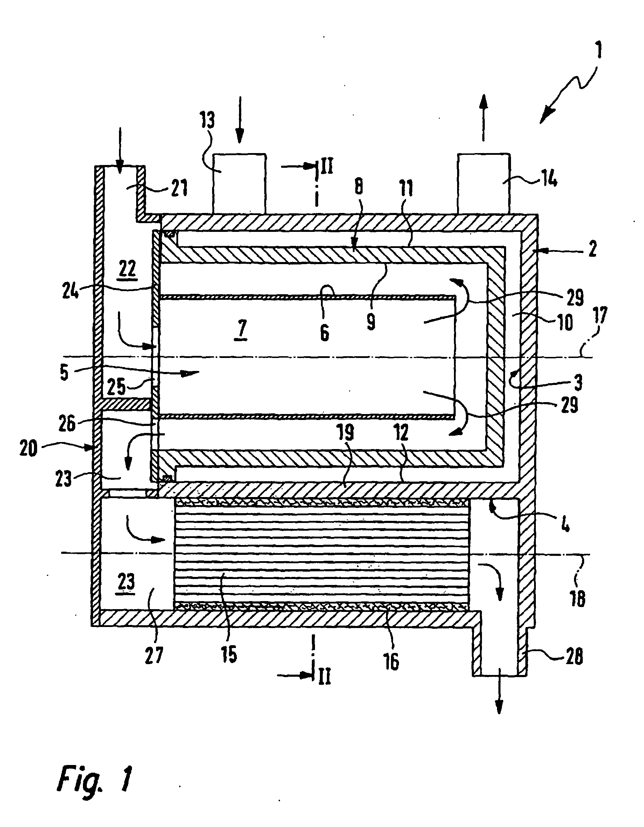

Entsprechend Fig. 1 weist ein Heizgerät 1 ein Gehäuse 2 auf, das einen Brennkammerschacht 3 und einen Katalysatorschacht 4 enthält. Das Gehäuse 2 ist einteilig oder einstückig ausgebildet und beispielsweise durch ein Druckgussverfahren als integrales Bauteil hergestellt. Das Heizgerät 1 kann beispielsweise als Standheizung und/oder als Zuheizer eines Kraftfahrzeugs ausgebildet sein, wobei das Heizgerät 1 unabhängig von einer Brennkraftmaschine des Kraftfahrzeugs arbeitet.

Im Brennkammerschacht 3 ist eine Brennkammer 5 untergebracht, die im wesentlichen aus einem von einem Flammrohr 6 umhüllten Brennraum 7 besteht. Die Brennkammer 5 ist ihrerseits von einem Wärmeübertragungsmantel 8 umhüllt, wobei die Dimensionierung so gewählt ist, dass zwischen dem Flammrohr 6 und einer Innenseite 9 des Wärmeübertragungsmantels 8 ein Strömungsweg 29 für die heißen Verbrennungsabgase ausgebildet ist. Dementsprechend wird die Innenseite 9 des Wärmeübertragungsmantels 8 im Betrieb des Heizgeräts 1 mit heißen Verbrennungsabgasen beaufschlagt. Des weiteren ist der Wärmeübertragungsmantel 8 an seiner Innenseite 9 im Betrieb des Heizgeräts 1 der vom Flammrohr 6 emittierten Wärmestrahlung ausgesetzt. Der Wärmeübertragungsmantel 8 ist so dimensioniert und in den Brennkammerschacht 3 eingesetzt, dass zwischen dem Brennkammerschaft 3 und dem Wärmeübertragungsmantel 8 ein Kühlfluidraum 10 ausgebildet ist. Eine Außenseite 11 des Wärmeübertragungsmantels 8 bildet dabei eine Innenhülle dieses Kühlfluidraums 10, während eine Innenseite 12 des Brennkammerschachts 3 die Außenhülle des Kühlfluidraums 10 bildet. Bei einem üblichen Heizgerät 1 wird Wasser oder ein Wasser-Glykol-Gemisch als Kühlfluid verwendet. Zweckmäßig sind am Gehäuse 2 ein Kühlfluideinlass 13 sowie ein Kühlfluidauslass 14 einstückig oder einteilig ausgebildet, die jeweils mit dem Kühlfluidraum 10, also mit dem Brennkammerschacht 3 kommunizieren. Der Kühlfluidraum 10 ist im Betrieb des Heizgeräts 1 von einem Kühlfluid durchströmt, um die von der Brennkammer 5 lauf den Wärmeübertragungsmantel 8 übertragene Wärme abzuführen. Dementsprechend wird durch das Einsetzen des Wärmeübertragungsmantels 8 in den Brennkammerschacht 3 ein Wärmeübertrager ausgebildet, der es ermöglicht, die von der Brennkammer 5 erzeugte Wärme an ein Kühlfluid zu übertragen.

Im Katalysatorschacht 4 ist ein Katalysatorelement 15 untergebracht, das hier als einteiliger Monolith ausgebildet ist. Der Katalysator-Monolith 15 besteht beispielsweise aus einer katalytisch beschichteten Keramik. Das Katalysatorelement 15 ist dabei von einem Lagerungsmaterial 16 umhüllt, um den stoßempfindlichen Monolithen 15 stoßabsorbierend und spannungsfrei im Katalysatorschacht 4 zu fixieren. Das Lagerungsmaterial 16 besteht zweckmäßig aus einer Quellmatte.

Brennkammerschacht 3 und Katalysatorschacht 4 sind bei der hier gezeigten bevorzugten Ausführungsform parallel zueinander ausgerichtet, d.h. eine Längsachse 17 des Brennkammerschachts 3 verläuft parallel zu einer Längsachse 18 des Katalysatorschachts 4. Hierdurch kann das Gehäuse 2 relativ kompakt bauen. Zu diesem Zweck sind außerdem der Brennkammerschacht 3 und der Katalysatorschacht 4 durch einen gemeinsamen Wandabschnitt 19 voneinander getrennt. Neben einer kompakten Bauweise ermöglicht dieser gemeinsame Wandabschnitt 19 außerdem eine rasche Erwärmung des Katalysators 15 bei der Inbetriebnahme des Heizgeräts 1.

Die beiden Schächte 3 und 4 sind jeweils auf derselben Gehäuseseite, entsprechend Fig. 1 links, offen, wobei das Gehäuse 2 an dieser Seite mit einem Gehäusedeckel 20 verschlossen ist. Dieser Gehäusedeckel 20 kann ebenfalls einteilig oder einstückig, insbesondere als Druckgussteil, ausgebildet sein. Der Gehäusedeckel 20 besitzt einen Frischgaseinlass 21 und enthält einen Frischgasraum 22 sowie einen Abgasraum 23. Dabei werden Frischgasraum 22 und Abgasraum 23 erst beim Aufsetzen des Gehäusedeckels 20 auf das Gehäuse 2 vervollständigt. Des weiteren ist eine Brennkammerabschlussplatte 24 vorgesehen, an der das Flammrohr 6 angebracht sein kann und die ihrerseits am Wärmeübertragungsmantel 8 angebracht ist. Im zusammengebauten Zustand des Heizgeräts 1 bildet der Frischgasraum 22 eine kommunizierende Verbindung zwischen dem Frischgaseinlass 21 und einem Einlaß 25 der Brennkammer 5. Der Abgasraum 23 bildet eine kommunizierende Verbindung zwischen einem Auslass 26 der Brennkammer 5 und einem Einlaß 27 des Katalysatorschachts 4. Stromab des Katalysatorelements 15 ist außerdem ein Abgasauslass 28, z.B. in Form eines Stutzens, ausgebildet, der zweckmäßig einteilig oder einstückig am Gehäuse 2 ausgeformt ist.

Im Betrieb des Heizgeräts 1 wird über den Frischgaseinlass 21 dem Heizgerät 1 Frischgas zugeführt, das in den Frischgasraum 22 eintritt. Vom Frischgasraum 22 gelangt das Frischgas über den Brennkammereinlass 25 in den Brennraum 7 der Brennkammer 5. Die bei der Verbrennung entstehenden heißen Verbrennungsabgase treten insbesondere an dessen Stirnseite aus dem Flammrohr 6 aus und umspülen dabei das Flammrohr 6. Hierbei wird die Innenseite 9 des Wärmeübertragungsmantels 8 mit den heißen Verbrennungsabgasen und mit Strahlungswärme beaufschlagt. An seiner Außenseite 11 wird der Wärmeübertragungsmantel 8 gekühlt, indem das Kühlfluid im Kühlfluidraum 10 Wärme aufnimmt und abtransportiert. Insoweit bewirkt der Wärmeübertragungsmantel 8 eine Übertragung der Wärmeenergie von den heißen Verbrennungsabgasen auf das Kühlfluid. Dieses Kühlfluid kann z.B. zum Erwärmen eines Fahrzeuginnenraums und/oder einer Brennkraftmaschine des mit dem Heizgerät 1 ausgestatteten Fahrzeugs dienen.

Die mehr oder weniger abgekühlten Verbrennungsabgase folgen dem Strömungsweg 29 und treten am Brennkammeraustritt 26 von der Brennkammer 5 in den Abgasraum 23 über. Hier erfolgt eine Umlenkung der Verbrennungsabgase zum Katalysatoreinlass 27. Im Katalysatorelement 15, das insbesondere als Oxidationskatalysator ausgebildet sein kann, erfolgt eine Umsetzung von Schadstoffen, um die Schadstoffemission der Abgase zu verbessern. Über den Abgasauslass 28 treten die katalytisch behandelten Verbrennungsabgase aus dem Heizgerät 1 aus und z.B. in eine nicht gezeigte Abgasleitung ein.

Durch die Ausbildung eines vom Brennkammerschacht 3 völlig separaten Katalysatorschachts 4 ist der Katalysatorschacht 4 bzw. das darin untergebrachte Katalysatorelement 15 stromab des Abgasauslasses 26 der Brennkammer 5 angeordnet. Demnach werden die Abgase erst dann dem Katalysator 15 zugeführt, wenn der Hauptzweck des Heizgeräts 1, nämlich die Wärmeübertragung von den Verbrennungsabgasen auf das Kühlfluid, im wesentlichen abgeschlossen ist. Dementsprechend werden dem Katalysatorelement 15 vergleichsweise kalte Abgase zugeführt, wodurch das Katalysatorelement 15 eine relativ hohe Lebenszeit erhält. Durch den gemeinsamen Wandabschnitt 19 kann dabei einerseits bei der Inbetriebnahme des Heizgeräts 1 rasch die Betriebstemperatur des Katalysatorelements 15 erreicht werden, da über den Wandabschnitt 19 das Katalysatorelement 15 beheizbar ist. Andererseits kann im Betrieb zusätzliche Wärme, die im Katalysator 15 entstehen kann, über den Wandabschnitt 19 an das Kühlfluid abgegeben werden, wodurch der Gesamtwirkungsgrad des Heizgeräts 1 zusätzlich gesteigert wird.

## Patentansprüche

1. Einteiliges oder einstückiges Gehäuse (2) für ein Heizgerät (1), insbesondere Zuheizer und/oder Standheizung eines Fahrzeugs,
mit einem Brennkammerschacht (3) zur Aufnahme eines Wärmeübertragungsmantels (8), dessen Innenseite (9) eine Brennkammer (5) umhüllt und im Betrieb des Heizgeräts (1) mit heißen Verbrennungsabgasen beaufschlagt ist, und dessen Außenseite (11) die Innenhülle eines Kühlfluidraums (10) bildet, der im Betrieb des Heizgeräts (1) von einem Kühlfluid durchströmt ist und dessen Außenhülle durch eine Innenseite (12) de Brennkammerschachts (3) gebildet ist,
**dadurch gekennzeichnet, daß** das Gehäuse (2) außerdem einen Katalysatorschacht (4) zur Aufnahme wenigstens eines Katalysatorelements (15), das im Betrieb des Heizgeräts (1) von den Verbrennungsabgasen durchströmt ist, enthält.

2. Gehäuse nach Anspruch 1,
**dadurch gekennzeichnet,**
**dass** der Katalysatorschacht (4) stromab eines Abgasauslasses (26) der Brennkammer (5) angeordnet ist.

3. Gehäuse nach Anspruch 1 oder 2,
**dadurch gekennzeichnet,**
**dass** am Gehäuse (2) einteilig oder einstückig ein Abgasauslass (28) ausgebildet ist, der mit dem Katalysatorschacht (4) kommuniziert.

4. Gehäuse nach einem der Ansprüche 1 bis 3,
**dadurch gekennzeichnet,**
**dass** am Gehäuse (2) einteilig oder einstückig ein Kühlfluideinlass (13) oder ein Kühlfluidauslass (14) ausgebildet ist/sind, der/die mit dem Brennkammerschacht (3) kommuniziert/kommunizieren.

5. Gehäuse nach einem der Ansprüche 1 bis 4,
**dadurch gekennzeichnet,**
**dass** Brennkammerschacht (3) und Katalysatorschacht (4) einen gemeinsamen Wandabschnitt (19) besitzen.

6. Gehäuse nach einem der Ansprüche 1 bis 5,
**dadurch gekennzeichnet,**
**dass** eine Längsrichtung (17) des Brennkammerschachts (3) und eine Längsrichtung (18) des Katalysatorschachts (4) parallel zueinander verlaufen.

7. Gehäuse nach einem der Ansprüche 1 bis 6,
**dadurch gekennzeichnet,**
**dass** der Brennkammerschacht (3) und der Katalysatorschacht (4) auf derselben Gehäuseseite offen sind.

8. Heizgerät, insbesondere Zuheizer und/oder Standheizung eines Fahrzeugs, mit einem einteiligen oder einstückigen Gehäuse (2), das einen Brennkammerschacht (3) enthält, in dem ein Wärmeübertragungsmantel (8) angeordnet ist, dessen Innenseite (9) eine Brennkammer (5) umhüllt und im Betrieb des Heizgeräts (1) mit heißen Verbrennungsabgasen beaufschlagt ist und dessen Außenseite (11) die Innenhülle eines Kühlfluidraums (10) bildet, der im Betrieb des Heizgeräts (1) von einem Kühlfluid durchströmt ist und dessen Außenhülle durch eine Innenseite (12) des Brennkammerschachts (3) gebildet ist, **dadurch gekennzeichnet, daß** das Gehäuse (2) außerdem einen Katalysatorschacht (3) enthält, in dem wenigstens ein Katalysatorelement (15) angeordnet ist, das im Betrieb des Heizgeräts (1) von den Verbrennungsabgasen durchströmt ist.

9. Heizgerät nach Anspruch 8,
**dadurch gekennzeichnet,**
- **dass** das Gehäuse (2) mit einem Gehäusedeckel (20) verschlossen ist,
- wobei der Gehäusedeckel (20) einen Frischgaseinlass (21) aufweist, durch den im Betrieb des Heizgeräts (1) Frischgas in das Heizgerät (1) eintritt,
- wobei der Gehäusedeckel (20) einen Frischgasraum (22) enthält, der den Frischgaseinlass (21) mit einem Einlaß (25) der Brennkammer (5) kommunizierend verbindet,
- wobei der Gehäusedeckel (20) einen Abgasraum (23) enthält, der einen Auslass (26) der Brennkammer (5) mit einem Einlaß (27) des Katalysatorschachts (4) kommunizierend verbindet.

10. Heizgerät nach Anspruch 9,
**dadurch gekennzeichnet,**
**dass** der Gehäusedeckel (20) einteilig oder einstückig ausgebildet ist.

11. Heizgerät nach einem der Ansprüche 8 bis 10,
**dadurch gekennzeichnet,**
**dass** das Katalysatorelement (15) als Monolith ausgebildet ist.

12. Heizgerät nach einem der Ansprüche 8 bis 11,
**gekennzeichnet durch** die kennzeichnenden Merkmale wenigstens eines der Ansprüche 2 bis 7.

## Claims

1. A one-piece or one-part housing for a heating apparatus (1), in particular, an auxiliary heater and/or a parking heater for a motor vehicle,
- with a combustion chamber shaft (3) that serves for accommodating a heat transfer casing (8), the inner side (9) of which encloses a combustion chamber (5) and is subjected to hot exhaust gases during the operation of the heating apparatus (1),
wherein the outer side (11) of the heat transfer casing forms the inner envelope of a cooling fluid space (10), through which a cooling fluid flows during the operation of the heating apparatus (1), and wherein the outer envelope of the cooling fluid space is formed by the inner side (12) of the combustion chamber shaft (3), and
- with a catalyst shaft (4) for accommodating at least one catalytic element (15), through which exhaust gases flow during the operation of the heating apparatus (1).

2. The housing according to Claim 1,
**characterized by** the fact
that the catalyst shaft (4) is arranged downstream of an exhaust gas outlet (26) of the combustion chamber (5).

3. The housing according to Claim 1 or 2,
**characterized by** the fact
that an exhaust gas outlet (28) that communicates with the catalyst shaft (4) is integrally formed onto the housing (2).

4. The housing according to one of Claims 1-3,
**characterized by** the fact
that a cooling fluid inlet (13) or a cooling fluid outlet (14) that communicate(s) with the combustion chamber shaft (3) is/are integrally formed onto the housing (2).

5. The housing according to one of Claims 1-4,
**characterized by** the fact
that the combustion chamber shaft (3) and the catalyst shaft (4) have a common wall section (19).

6. The housing according to one of Claims 1-5,
**characterized by** the fact
that a longitudinal direction (17) of the combustion chamber shaft (3) and a longitudinal direction (18) of the catalyst shaft (4) extend parallel to one another.

7. The housing according to one of Claims 1-6,
**characterized by** the fact
that the combustion chamber shaft (3) and the catalyst shaft (4) are open on the same side of the housing.

8. A heating apparatus, in particular, an auxiliary heater and/or a parking heater for a motor vehicle, with a one-piece or one-part housing (2) that contains a combustion chamber shaft (3), in which a heat transfer casing (8) is arranged, wherein the inner side (9) of said heat transfer casing encloses a combustion chamber (5) and is subjected to hot exhaust gases during the operation of the heating apparatus (1), wherein the outer side (11) of the heat transfer casing forms the inner envelope of a cooling fluid space (10), through which a cooling fluid flows during the operation of the heating apparatus (1), wherein the outer envelope of said cooling fluid space is formed by the inner side (12) of the combustion chamber shaft (3), and wherein the housing (2) also contains a catalyst shaft (3), in which at least one catalytic element (15) is arranged through which hot exhaust gases flow during the operation of the heating apparatus (1).

9. The heating apparatus according to Claim 8,
**characterized by** the fact
- that the housing (2) is closed with a housing cover (20),
- wherein the housing cover (20) contains a fresh gas inlet (21), through which fresh gas is introduced into the heating apparatus (1) during the operation of the heating apparatus (1),
- wherein the housing cover (20) contains a fresh gas chamber (22) that produces a communicating connection between the fresh gas inlet (21) and an inlet (25) of the combustion chamber (5), and
- wherein the housing cover (20) contains an exhaust gas chamber (23) that produces a communicating connection between an outlet (26) of the combustion chamber (5) and an inlet (27) of the catalyst shaft (4).

10. The heating apparatus according to Claim 9,
**characterized by** the fact
that the housing cover (20) consists of one part or one piece.

11. The heating apparatus according to one of Claims 8-10,
**characterized by** the fact
that the catalytic element (15) is realized in the form of a monolith.

12. The heating apparatus according to one of Claims 8-11,
**characterized by**
the characteristics disclosed in the characterizing portion of at least one of Claims 2-7.

## Revendications

1. Boîtier (2) en une pièce ou un bloc pour un appareil de chauffage (1), en particulier chauffage d'appoint et/ou chauffage auxiliaire d'un véhicule automobile, avec un cage de chambre de combustion (3) destinée à recevoir une chemise de transfert de chaleur (8) dont la face intérieure (9) entoure une chambre de combustion (5) et est alimentée en gaz d'échappement brûlants lorsque l'appareil de chauffage (1) est en fonctionnement, et dont la face extérieure (11) forme l'enveloppe intérieure d'un compartiment de fluide de refroidissement (10) qui est parcouru par un fluide de refroidissement lorsque l'appareil de chauffage (1) est en fonctionnement, et dont l'enveloppe extérieure est formée par une face intérieure (12) de la cage de chambre de combustion (3), **caractérisé en ce que** le boîtier (2) comporte encore une cage de catalyseur (4) destinée à recevoir au moins un élément de catalyseur (15) qui est parcouru par les gaz d'échappement lorsque l'appareil de chauffage (1) est en fonctionnement.

2. Boîtier selon la revendication 1, **caractérisé en ce que** la cage de catalyseur (4) est disposée en aval d'une sortie de gaz d'échappement (26) de la chambre de combustion (5).

3. Boîtier selon la revendication 1 ou 2, **caractérisé en ce que** sur le boîtier (2), une sortie de gaz d'échappement (28) est prévue en une pièce ou un bloc, qui communique avec la cage de catalyseur (4).

4. Boîtier selon l'une des revendications 1 à 3, **caractérisé en ce que** sur le boîtier (2), une entrée de fluide de refroidissement (13) ou une sortie de fluide de refroidissement (14) est prévue en une pièce ou un bloc, qui communique(nt) avec la cage de chambre de combustion (3).

5. Boîtier selon l'une des revendications 1 à 4, **caractérisée en ce que** la cage de chambre de combustion (3) et la cage de catalyseur (4) possèdent une portion de paroi (19) commune.

6. Boîtier selon l'une des revendications 1 à 5, **caractérisé en ce qu'**une direction longitudinale (17) de la cage de chambre de combustion (3) et une direction longitudinale (18) de la cage de catalyseur (4) sont parallèles entre elles.

7. Boîtier selon l'une des revendications 1 à 6, **caractérisé en ce que** la cage de chambre de combustion (3) et la cage de catalyseur (4) sont ouvertes sur le même côté du boîtier.

8. Appareil de chauffage, en particulier chauffage d'appoint et/ou chauffage auxiliaire d'un véhicule automobile, comprenant un boîtier (2) en une pièce ou un bloc, qui comporte une cage de chambre de combustion (3) dans laquelle est disposée une chemise de transfert de chaleur (8), dont la face intérieure (9) entoure une chambre de combustion (5) et est alimentée en gaz d'échappement brûlants lorsque l'appareil de chauffage (1) est en fonctionnement, et dont la face extérieure (11) forme l'enveloppe intérieure d'un compartiment de fluide de refroidissement (10) qui est parcouru par un fluide de refroidissement lorsque l'appareil de chauffage (1) est en fonctionnement, et dont l'enveloppe extérieure est formée par une face intérieure (12) de la cage de chambre de combustion (3), **caractérisé en ce que** le boîtier (2) comporte encore une cage de catalyseur (3) dans laquelle est disposé au moins un élément de catalyseur (15) qui est parcouru par les gaz d'échappement lorsque l'appareil de chauffage (1) est en fonctionnement.

9. Appareil de chauffage selon la revendication 8, **caractérisé en ce que**
- le boîtier (2) est fermé par un couvercle de boîtier (20)
- le couvercle de boîtier (20) présentant une entrée de gaz frais (21) par laquelle du gaz frais entre dans l'appareil de chauffage (1) lorsque l'appareil de chauffage (1) est en fonctionnement,
- le couvercle de boîtier (20) comportant un compartiment de gaz frais (22), qui relie avec communication l'entrée de gaz frais (21) à une entrée (25) de la chambre de combustion,
- le couvercle de boîtier (20) comportant un compartiment de gaz d'échappement (23) qui relie, avec communication, une sortie (26) de la chambre de combustion (5) à une entrée (27) de la cage de catalyseur (4).

10. Appareil de chauffage selon la revendication 9, **caractérisé en ce que** le couvercle de boîtier (20) est réalisé en une pièce ou un bloc.

11. Appareil de chauffage selon l'une des revendications 8 à 10, **caractérisé en ce que** l'élément de catalyseur (15) se présente sous forme de monolithe.

12. Appareil de chauffage selon l'une des revendications 8 à 11, **caractérisé par** les éléments caractéristiques d'au moins l'une des revendications 1 à 7.
